# EUROPEAN PATENT APPLICATION

(11) **EP 4 475 301 A1**
(43) Date of publication of application: **11.12.2024**
(21) Application number: 23850474.0
(22) Date of filing: 03.08.2023
(51) Int. Cl.: H01M 50/24, H01M 50/593, H01M 50/531, H01M 50/503, H01M 50/249

(54) **BATTERY MODULE HAVING COMPARTMENT PLATE PART AND BATTERY PACK INCLUDING SAME**

(30) Priority: 05.08.2022 KR 20220097740
(71) Applicant: LG Energy Solution, Ltd., Seoul 07335 (KR)
(72) Inventor: LEE, Jung-Hoon, Daejeon 34122 (KR); PARK, Min-Soo, Daejeon 34122 (KR)
(74) Representative: Plasseraud IP
(86) International application number: PCT/KR2023/011449
(87) International publication number: WO 2024/029974

(57) **Abstract**

A battery module according to the present disclosure includes a module case; a cell stack accommodated inside the module case and composed of a plurality of battery cells stacked and arranged in one direction; and at least one partition plate portion dividing the battery cells or the receiving space between the inner wall of the module case disposed adjacent to the electrode leads of the battery cells and one side of the cell stack.

## Description

### TECHNICAL FIELD

The present application claims priority to Korean Patent Application No. 10-2022-0097740 filed on August 5, 2022, the disclosures of which are incorporated herein by reference.

The present disclosure relates to a battery module, and more specifically, to a battery module designed to delay chain ignition of battery cells as much as possible by preventing combustion discharges, flames, and heat generated from ignited battery cells from being easily transferred to other battery cells in the event of an internal ignition in the battery module.

### BACKGROUND ART

Semi-permanent batteries that convert electrical energy into chemical energy and can be charged and discharged repeatedly are called secondary batteries, which are distinguished from primary batteries that cannot be reused after being used once.

Secondary batteries include lithium secondary batteries, nickel cadmium (Ni-Cd) batteries, lead-acid batteries, nickel hydride (Ni-MH) batteries, zinc-air batteries, and alkaline manganese batteries. Among these, lead-acid batteries and lithium secondary batteries can be said to be the most actively commercialized secondary batteries.

In particular, since lithium secondary batteries have advantages such as high energy storage density, light weight and miniaturization, excellent safety, low discharge rate, and long life, they have been actively used as electric vehicle batteries in recent years. For reference, lithium secondary batteries are generally classified into cylindrical, prismatic, and pouch types according to their manufacturing type, and their applications range from electric vehicle batteries to ESS batteries and other electrical devices.

Currently, the operating voltage of one lithium secondary battery cell is approximately 2.5 V to 4.5 V. Therefore, to apply secondary batteries as an energy source for electric vehicles, a battery module is configured by connecting a plurality of lithium-ion battery cells in series and/or in parallel, and then a battery pack is configured by connecting the battery modules in series and/or in parallel.

On the other hand, since secondary batteries involve chemical reactions during charge/discharge, their performance may be degraded when used in an environment with a higher than appropriate temperature, and there is always a possibility of unexpected ignition or explosion when the heat is not controlled to an appropriate temperature. In addition, the battery module has a structure in which these secondary batteries are intensively accommodated inside the module housing, so if any one secondary battery undergoes heat propagation and becomes a trigger cell, heat and flame are rapidly propagated to the surrounding secondary batteries, thereby making it easier for secondary batteries to ignite in a chain reaction.

Accordingly, it is urgent to improve the structure of the battery pack that may block the explosion of the battery pack and ensure sufficient evacuation time for users in the event of ignition of the battery pack by placing a partition wall in each cell unit to delay the heat propagation of a thermally runaway trigger cell to the adjacent cells or the entire module as much as possible.

### DISCLOSURE

### Technical Problem

The present disclosure is designed to solve the problems of the related art, and therefore the present disclosure is directed to providing a battery module that may block the explosion of the battery pack and ensure sufficient evacuation time for users in the event of ignition of the battery pack by preventing or delaying as much as possible the propagation of heat and flame from a thermally runaway trigger cell to adjacent cells.

Technical problems to be solved by the present disclosure are not limited to the above-described problems, and other problems not mentioned herein may be clearly understood by those skilled in the art from the following description of the present disclosure.

### Technical Solution

A battery module according to the present disclosure may include a module case; a cell stack accommodated inside the module case and composed of a plurality of battery cells stacked and arranged in one direction; and at least one partition plate portion dividing the battery cells or the receiving space between the inner wall of the module case disposed adjacent to the electrode leads of the battery cells and one side of the cell stack.

The partition plate portion may include a top plate disposed on the top of the cell stack; a busbar frame provided to be bent at both ends of the top plate, and including a lead slot through which the electrode lead passes and a plurality of busbars electrically connected to the electrode lead; and a plurality of separation partition walls provided to protrude from the busbar frame, and dividing the receiving space along the stacking direction in which the battery cells are stacked.

The partition plate portion may further include a flame retardant pad that is disposed between the battery cells and is exposed at both ends thereof through the separation partition wall.

A through hole through which the flame retardant pad passes may be provided in the separation partition wall. The top plate and the busbar frame may have a 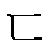 -shape with an open bottom.

The module case may include a case body having an open end and provided in a hollow shape so that the cell stack may be inserted therein along the longitudinal direction; and a case cover facing one side of the cell stack and coupled to the open end of the case body.

An insulating plate may be provided on the top plate, wherein the case body may be provided with a receiving step in which the insulating plate is accommodated.

A first hinge portion rotating about the transverse axial center may be provided between the top plate and the busbar frame.

A second hinge portion rotating about the longitudinal axial center may be provided between the busbar frame and the separation partition wall.

According to another aspect of the present disclosure, a battery pack including one or more battery modules described above may be provided.

According to still another aspect of the present disclosure, a vehicle including the battery pack may be provided.

### Advantageous Effects

According to one aspect of the present disclosure, a battery module that may block the explosion of the battery pack and ensure sufficient evacuation time for users in the event of ignition of the battery pack by preventing or delaying as much as possible the propagation of heat and flame from a thermally runaway trigger cell to adjacent cells may be provided.

That is, in the battery module according to the present disclosure, the receiving space (a space between the cell stack and the case cover) inside the battery module in which heat, flame, and the like generated in the event of ignition of a specific battery cell may move is blocked and obstructed by a partition plate portion. The blocking unit may prevent heat, high-temperature particles, flames, and the like generated in the ignited trigger cell from being easily transferred to adjacent battery cells, thereby delaying chain ignition or explosion of the battery cells as much as possible.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a schematic perspective view of a battery module according to an embodiment of the present disclosure.
FIG. 2 is an exploded perspective view of the main components of the battery module of FIG. 1.
FIG. 3 is a schematic perspective view of the partition plate portion of FIG. 2.
FIG. 4 is a schematic front view of a cell stack and a partition plate portion according to an embodiment of the present disclosure.
FIG. 5 is a schematic cross-sectional view of a portion of a battery module according to an embodiment of the present disclosure.
FIG. 6 is a schematic longitudinal cross-sectional view of a portion of a battery module according to an embodiment of the present disclosure.
FIG. 7 is a schematic perspective view showing that an insulating plate and a first hinge portion are mounted on a partition plate portion according to another embodiment of the present disclosure.
FIG. 8 is a longitudinal cross-sectional view showing that a partition plate portion according to another embodiment of the present disclosure is assembled to a cell sack and a module case.
FIG. 9 is a perspective view of a partition plate portion according to still another embodiment of the present disclosure.
FIG. 10 is a schematic cross-sectional view of a portion of a battery module in which the partition plate portion of FIG. 9 is assembled.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

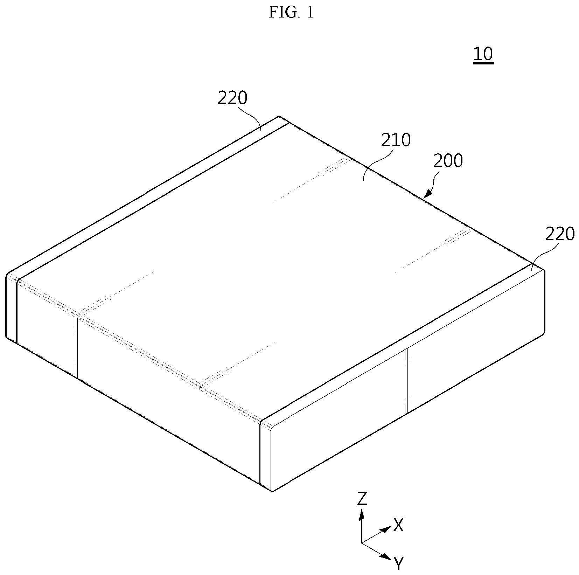

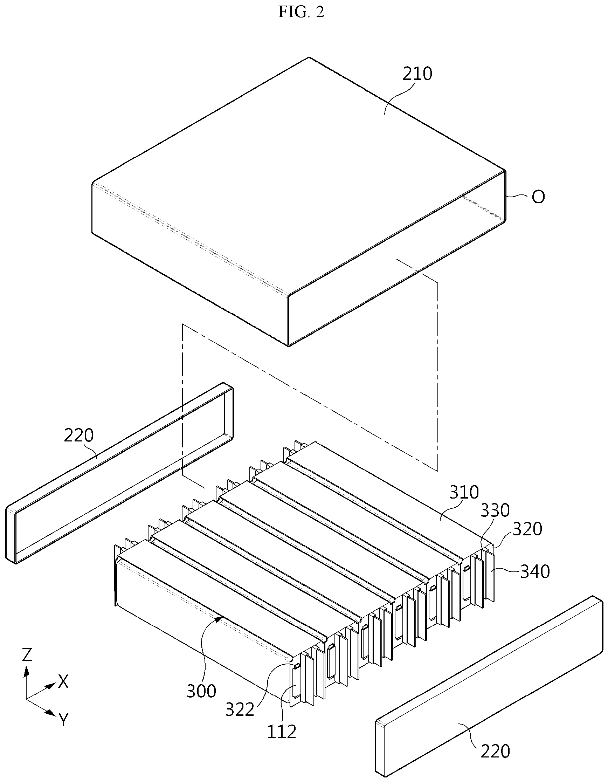

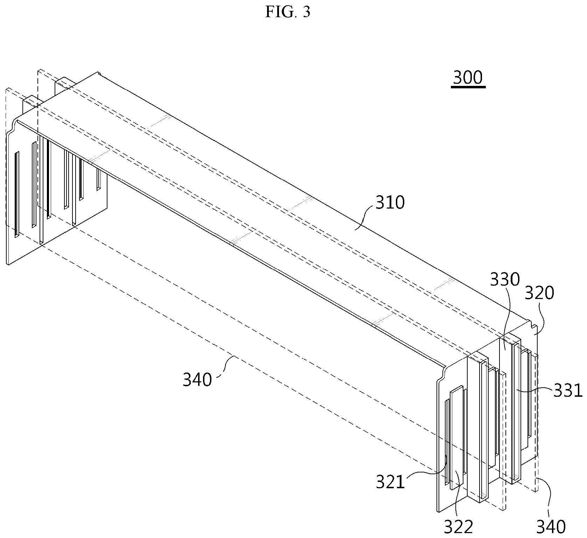

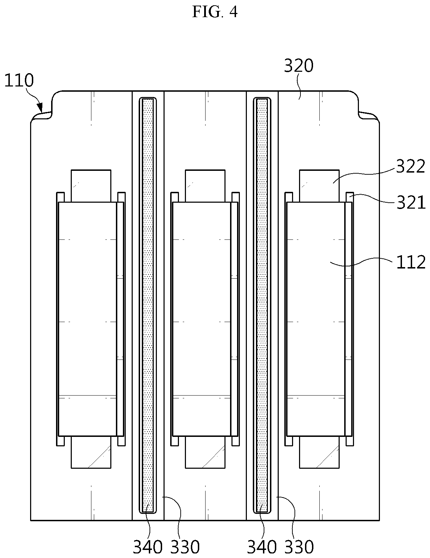

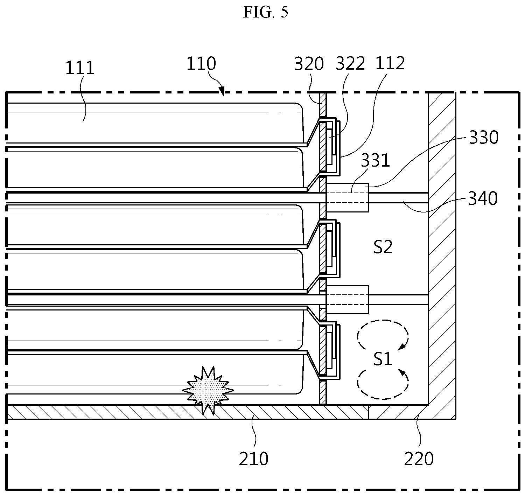

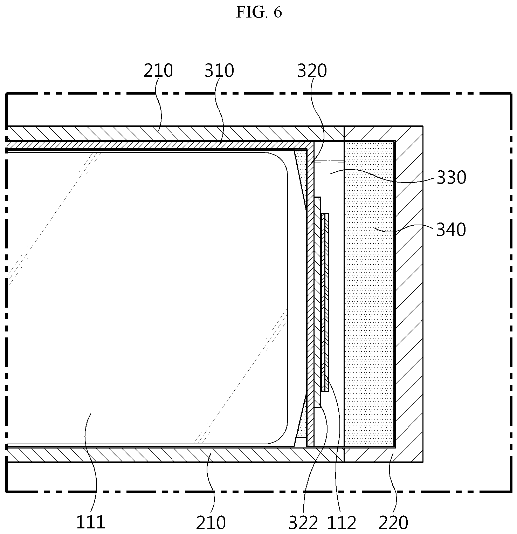

FIG. 1 is a schematic perspective view of a battery module according to an embodiment of the present disclosure, FIG. 2 is an exploded perspective view of the main components of the battery module of FIG. 1, FIG. 3 is a schematic perspective view of the partition plate portion of FIG. 2, FIG. 4 is a schematic front view of a cell stack and a partition plate portion according to an embodiment of the present disclosure, FIG. 5 is a schematic cross-sectional view of a portion of a battery module according to an embodiment of the present disclosure, and FIG. 6 is a schematic longitudinal cross-sectional view of a portion of a battery module according to an embodiment of the present disclosure.

Referring to these drawings, the battery module 10 according to an embodiment of the present disclosure includes a module case 200, a cell stack 110, and a partition plate portion 300.

For convenience of description, the cell stack 110 will be described first.

The cell stack 110 is an aggregate of battery cells 111 formed by stacking a plurality of battery cells 111. That is, as shown in FIG. 2, the cell stack 110 may be a group of a plurality of pouch-type battery cells 111 stacked in one direction (X direction) with the wide surface standing up. And, multiple cell stacks may be gathered to form a cell assembly.

The pouch-type battery cell 111 includes an electrode assembly, a pouch case accommodating the electrode assembly, and a pair of electrode leads 112 connected to the electrode assembly and drawn out to the outside of the pouch case to function as electrode terminals. The pair of electrode leads 112 are drawn out from both ends of the battery cell 111, that is, in the longitudinal direction (±Y direction).

If necessary, the pouch-type battery cell 111 may have a shape in which the electrode lead 112 is located only at one end in the Y-axis direction, for example, at the end in the +Y-axis direction. On the other hand, the present disclosure is not limited by the specific type or form of this battery cell 111, and various battery cells 111 known at the time of filing of the present disclosure may be employed to form the cell stack 110 of the present disclosure.

The module case 200 is a component for protecting the cell stack 110 from external impact or the like, and may preferably be made of a material with excellent mechanical rigidity. The module case 200 according to this embodiment includes a case body 210 and a case cover 220, as shown in FIGS. 1 and 2.

The case body 210 may be formed in a rectangular tubular shape having open ends O at both ends in the longitudinal direction and a hollow structure with an empty interior, so that the cell stack 110 may be inserted into the interior along the longitudinal direction. That is, the case body 210 may be configured to allow insertion of the cell stack 110 therein in a slide or press fit manner.

In order not to expose one side of the cell stack 110 where the electrode leads 112 of the battery cells 111 are located, that is, a portion where the electrode leads 112 are fixedly connected to the busbars 322 on the busbar frame 320, to the outside, the case cover 220 may be provided to face one side of the cell stack 110 and to be coupled to the open end O of the case body 210. The case cover 220 may be configured to be made of, for example, an insulating material on the inside and a metal material on the outside, and to be fixedly coupled to the case body 210 by welding.

Meanwhile, although not shown for convenience of drawing, the case cover 220 may partially have holes or slits to expose components that need to be exposed to the outside, such as the positive electrode and negative electrode terminals or connectors of the battery module 10.

The partition plate portion 300 is provided between the battery cells 111 or on one side of the cell stack 110, and serves to mutually divide the battery cells 111 or the receiving space between the inner wall of the module case 200 disposed adjacent to the electrode leads 112 on both ends of the battery cells 111 and one side of the cell stack 110.

As shown mainly in FIG. 3, the partition plate portion 300 includes a top plate 310 disposed on the top of the cell stack 110, a busbar frame 320 provided to be bent at both ends of the top plate 310 and having a lead slot 321 through which the lead 112 passes and a plurality of busbars 322 electrically connected to the electrode lead 112, a plurality of separation partition walls 330 provided to protrude from the busbar frame 320 and dividing the receiving space into sections along the stacking direction in which the battery cells 111 are stacked, and a flame retardant pad 340 that is disposed between the battery cells 111 and is exposed at both ends thereof through the separation partition wall 330.

The top plate 310 is provided to have a predetermined width (e.g., the thickness of six battery cells 111) to cover the upper surface of the cell stack 110 and is interconnected with a pair of busbar frames 320 at both ends of the top plate 310. Accordingly, the top plate 310 and the busbar frame 320 are arranged in a 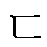 -shape with an open bottom.

The top plate 310 is disposed on the upper surface of the cell stack 110 and divides the gap space between the top of the cell stack 110 and the case body 210, thereby serving to prevent or delay as much as possible the primary propagation of heat and flame from the thermally runaway trigger cell to adjacent cells.

As shown in FIGS. 3 and 4, the busbar frame 320 is provided to be bent at both ends of the top plate 310 and to be in the form of a plate having a size capable of covering the front (+Y direction) or the rear (-Y direction) of the cell stack 110. This busbar frame 320, together with the top plate 310, may be injection molded with an electrically insulating material, and thus serves to prevent or delay as much as possible the primary propagation of heat and flame of a thermally runaway trigger cell to adjacent cells.

The busbar frame 320 has a plurality of lead slots 321 through which the electrode lead 112 of the pouch-type battery cell 111 may pass in the +Y-axis or -Y-axis direction, and the plurality of lead slots 321 may be provided along the stacking direction (X direction) of the battery cells 111. Accordingly, the electrode lead 112 may pass through the lead slot 321.

As shown in FIG. 4, the busbar 322 is provided between a pair of lead slots 321, and a pair of electrode leads 112 exposed through the lead slot 321 are bent toward the busbar 322 in the center, fixed by welding to the surface of the busbar 322, and electrically connected. A plurality of such busbars 322 are disposed along the stacking direction in which the battery cells 111 are stacked. The plurality of busbars 322 are made of an electrically conductive material, for example, metal such as copper, aluminum, nickel, or the like and are electrically connected to the electrode leads 112.

Meanwhile, the drawings are simplified to a configuration in which only the electrode leads 112 are exposed at both ends of the cell stack 110, that is, at the front and rear, but additional components such as connectors, other printed circuit boards (PCBs), sensing means, and the like may be installed in addition to the electrode leads 112, and a separate support structure for supporting and fixing the additional components may be added.

As shown in FIGS. 5 and 6, the separation partition wall 330 is provided to protrude from the busbar frame 320 and divides the receiving space between the electrode leads 112 at both ends of the battery cell 111 and an inner wall of the module case 200 disposed adjacent thereto. A plurality of separation partition walls 330 may be provided to divide the receiving space into a plurality of sections along the stacking direction in which the battery cells 111 are stacked.

As shown in FIG. 6, the height of the separation partition wall 330 is provided to correspond to the height of the upper surface of the top plate 310 and to contact the bottom wall of the module case 200, so that the receiving space where the electrode leads 112 are disposed may be completely partitioned without any upper or lower gaps. In addition, a through hole is provided in the separation partition wall 330, and both ends of the flame retardant pad 340 may be exposed to protrude relatively further outward than the ends of the separation partition wall 330 through the through hole.

Referring mainly to FIG. 5, the flame retardant pad 340 is disposed between the battery cells 111 to mutually partition the gap space between the battery cells 111. And, both ends of the flame retardant pad 340 are disposed to penetrate the through hole of the separation partition wall 330 to be exposed to the receiving space, and the front end of the flame retardant pad 340 is provided to contact the inner wall of the case cover 220. Here, the flame retardant pad 340 may be made of a material (e.g., silicone, mica) with low thermal conductivity and excellent heat resistance.

According to this embodiment, the flame retardant pad 340 is interposed in the gap space between the battery cells 111 as shown in FIG. 5, so that in the event of an internal ignition of the battery 10, the propagation of heat, high-temperature particles, flames, and the like generated from the ignited trigger cell to neighboring battery cells 111 in the stacking direction of the battery cells 111 is minimized.

In addition, when the partition plate portion 300 is mounted on the cell stack 110 according to this embodiment and the case body 210 and the case cover 220 are subsequently assembled, the receiving space between one side of the cell stack 110 and the adjacent case cover 220 is completely divided into S1 and S2 spaces by the separation partition wall 330 and the flame retardant pad 340 as shown in FIGS. 5 and 6. In this way, since the separation partition wall 330 and the flame retardant pad 340 divide the receiving space into sections, heat, high-temperature particles, flames, and the like that may partially leak and flow from the ignited trigger cell into the receiving space are prevented from being propagated to the neighboring cells 111.

In addition, the battery cells 111 adjacent to the trigger cell, their electrode leads 112 and busbars 322 may be less thermally damaged, thereby delaying the time it takes for all battery cells 111 and the battery module to ignite or explode, so that the user may recognize the internal ignition of the battery module 10 before the fire spreads and secure sufficient evacuation time to evacuate in a safer situation.

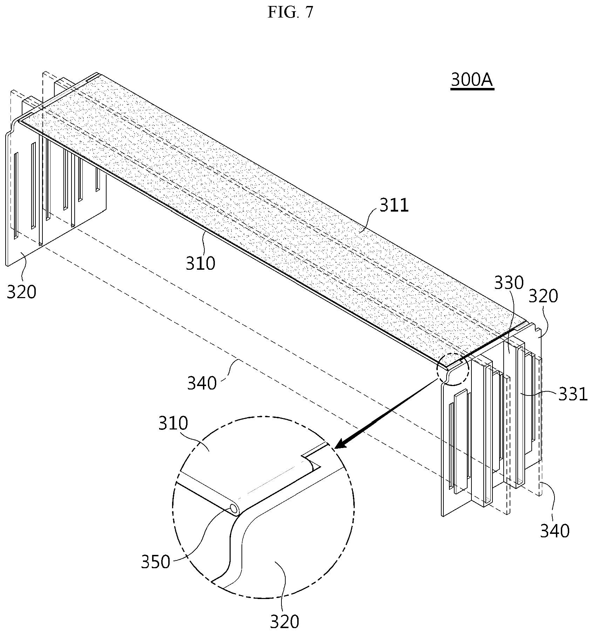

Next, other embodiments of the battery module of the present disclosure will be briefly described with reference to FIGS. 7 to 10.

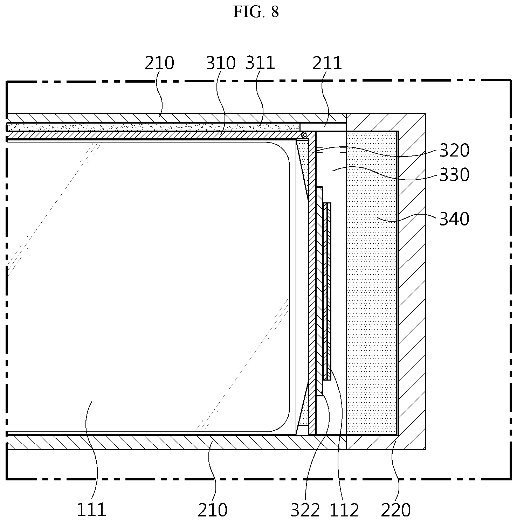

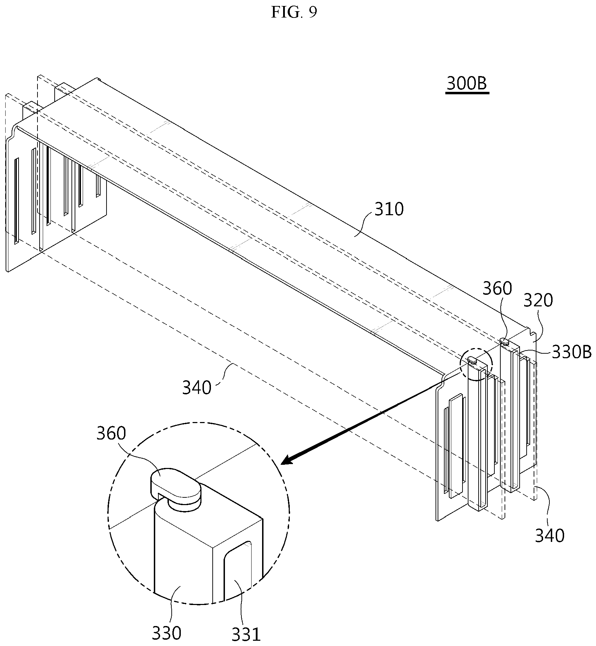

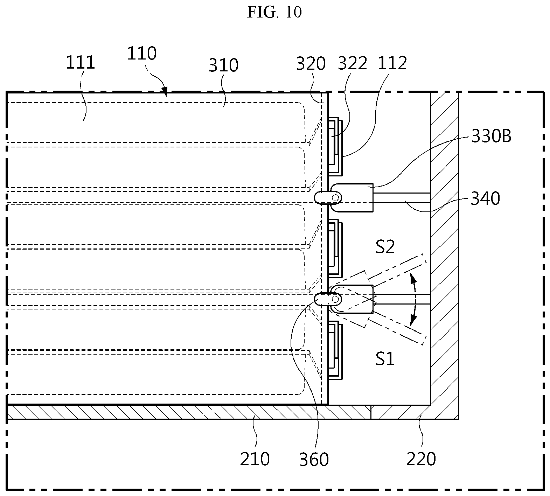

FIG. 7 is a schematic perspective view showing that an insulating plate and a first hinge portion are mounted on a partition plate portion according to another embodiment of the present disclosure, FIG. 8 is a longitudinal cross-sectional view showing that a partition plate portion according to another embodiment of the present disclosure is assembled to a cell sack and a module case, FIG. 9 is a perspective view of a partition plate portion according to still another embodiment of the present disclosure, and FIG. 10 is a schematic cross-sectional view of a portion of a battery module in which the partition plate portion of FIG. 9 is assembled.

The same reference numerals as in the previous drawings indicate the same members, and redundant descriptions of the same members will be omitted and the differences from the above-described embodiment will be mainly described.

The battery module according to another embodiment of the present disclosure has an additional configuration provided in the partition plate portion 300A when compared with the above-described embodiment. That is, an insulating plate 311 is additionally provided on the top plate 310, a receiving step 211 in which the insulating plate 311 is accommodated may be provided in the case body 210, and a first hinge portion 350 rotating about the transverse axial center may be provided between the top plate 310 and the busbar frame 320.

As shown in FIGS. 7 and 8, an insulating plate 311 is interposed between the top plate 310 and the case body 210, wherein the insulating plate 311 is a means for insulation between the cell stack 110 and the module case 200 made of a metal material for rigidity, and it may be made of an electrically insulating material such as plastic and disposed on top of the top plate 310.

In addition, the insulating plate 311 may also function to fill a gap or gap space at the time of forming an assembly tolerance when the cell stack 110 and the partition plate portion 300 coupled thereto are assembled inside the case body 210.

And, the case body 210 is provided with a receiving step 211 in which the insulating plate 311 is accommodated, and the insulating plate 311 may be easily inserted into the case body 210 through the receiving step 211. And, the top plate 310 and the busbar frame 320 are provided in a 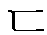 -shape, which may cause difficulty in assembly, so that the top plate 310 may be assembled to the cell stack 110 with the busbar frame 320 spread side by side with respect to the top plate 310 through the first hinge portion 350, and after the top plate 310 is seated and assembled in the cell stack 110 in place, the busbar frame 320 may rotate 90 degrees through the first hinge portion 350 to expose the electrode lead 112 through the lead slot 321 and then welded together, which may be convenient for assembly.

At this time, the flame retardant pad 340 already interposed between the battery cell 111 may also be assembled more easily as the busbar frame 320 is rotated.

Meanwhile, the partition plate portion 300B of the battery module according to still another embodiment of the present disclosure may be provided with a second hinge portion 360 rotating about the longitudinal axial center between the busbar frame 320 and the separation partition wall 330.

And, if necessary, as shown in FIGS. 9 and 10, the separation partition wall 330 may rotate about a partial longitudinal axial center.

That is, in a situation where an event occurs in any battery cell 111, compared to the embodiment in which the separation partition wall 330 shown in FIGS. 5 to 7 is fixed, the separation partition wall 330B may rotate manually or automatically through the second hinge portion 360 so that the separation partition wall 330B with respect to the busbar frame 320 may be tilted at a predetermined angle. For example, depending on the degree of runaway or the condition of the flame, the separation partition wall 330B on the right side of FIG. 10 rotates clockwise at a predetermined angle through the second hinge portion 360, so that the flame may be actively blocked by the tilted separation partition wall 330B to divide the S 1 and S2 spaces more easily.

Conversely, the same second hinge portion 360 may rotate counterclockwise at a predetermined angle to temporarily avoid flame and be disposed to protect the separation partition wall 330B or the flame retardant pad 340. In addition, by varying the angle of the separation partition wall 330B through the second hinge portion 360, it is possible to rapidly respond to an event situation or runaway conditions, thereby allowing active thermal damage management.

Meanwhile, a battery pack (not shown) according to the present disclosure may include one or more battery modules described above. The battery pack according to the present disclosure may further include a master battery management system (BMS) for integrated control of charge/discharge of one or more battery modules, a current sensor, a fuse, and a pack case for accommodating the above-described components.

The battery pack according to the present disclosure may be applied to an energy storage device, or to an electric scooter and a vehicle such as an electric vehicle or a hybrid vehicle.

The present disclosure has been hereinabove described with regard to a limited number of embodiments and drawings, but the present disclosure is not limited thereto and it is obvious to those skilled in the art that a variety of modifications and changes may be made thereto within the technical aspects of the present disclosure and the equivalent scope of the appended claims.

Meanwhile, the terms indicating directions as used herein such as upper, lower, left, right, front, and rear are used for convenience of description only, and it is obvious to those skilled in the art that the term may change depending on the position of the stated element or an observer.

## Claims

1. A battery module comprising:
a module case;
a cell stack accommodated inside the module case and composed of a plurality of battery cells stacked and arranged in one direction; and
at least one partition plate portion dividing the battery cells or the receiving space between the inner wall of the module case disposed adjacent to the electrode leads of the battery cells and one side of the cell stack.

2. The battery module according to claim 1,
wherein the partition plate portion comprises:
a top plate disposed on the top of the cell stack;
a busbar frame provided to be bent at both ends of the top plate, and comprising a lead slot through which the electrode lead passes and a plurality of busbars electrically connected to the electrode lead; and
a plurality of separation partition walls provided to protrude from the busbar frame, and dividing the receiving space along the stacking direction in which the battery cells are stacked.

3. The battery module according to claim 2,
wherein the partition plate portion further comprises a flame retardant pad that is disposed between the battery cells and is exposed at both ends thereof through the separation partition wall.

4. The battery module according to claim 3,
wherein a through hole through which the flame retardant pad passes is provided in the separation partition wall.

5. The battery module according to claim 3,
wherein the top plate and the busbar frame have a 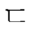 -shape with an open bottom.

6. The battery module according to claim 3,
wherein the module case comprises:
a case body having an open end and provided in a hollow shape so that the cell stack may be inserted therein along the longitudinal direction; and
a case cover facing one side of the cell stack and coupled to the open end of the case body.

7. The battery module according to claim 6,
wherein an insulating plate is provided on the top plate,
wherein the case body is provided with a receiving step in which the insulating plate is accommodated.

8. The battery module according to claim 7,
wherein a first hinge portion rotating about the transverse axial center is provided between the top plate and the busbar frame.

9. The battery module according to claim 7,
wherein a second hinge portion rotating about the longitudinal axial center is provided between the busbar frame and the separation partition wall.

10. A battery pack comprising a battery module according to any one of claims 1 to 9.

11. A vehicle comprising a battery pack according to claim 10.
